(19) Europäisches Patentamt / European Patent Office / Office européen des brevets

(11) **EP 3 557 825 A1**

(12) **EUROPEAN PATENT APPLICATION**

(43) Date of publication:
**23.10.2019 Bulletin 2019/43**

(51) Int Cl.:
*H04L 25/03* *(2006.01)*

(21) Application number: **18305475.8**

(22) Date of filing: **17.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Rivierawaves (RW)**
**06410 Biot (FR)**

(72) Inventor: **MEILHAC, Lisa**
**06560 VALBONNE (FR)**

(74) Representative: **Hautier, Nicolas et al**
**Cabinet Hautier**
**20, rue de la Liberté**
**06000 Nice (FR)**

(54) **ADAPTIVE OFDM-MIMO DECODER**

(57)    The invention relates to a soft-output MIMO OFDM decoder that comprises:
- a soft-output MIMO OFDM decoder layer 180 comprising a plurality of soft-output MIMO OFDM decoder units 181 for decoding a plurality of encoded data symbols multiplexed into a plurality of NSS spatial streams transported through a transmission channel over a plurality of NSD subcarriers, one unit 181 being provided per subcarrier,

- a channel quality estimator 310 configured to estimate, for each spatial stream, a quality of each subcarrier; and
- an iterations allocator 320 configured to set a number of computation iterations to be allocated to each unit 181 of said soft-output MIMO OFDM decoder layer 180 on the basis of the quality of the corresponding subcarrier as estimated by the estimator 310 and under the constraint that a total number of computation iterations SIT allocated over the NSD subcarriers is predetermined.

Figure 3

**Description**

FIELD OF THE INVENTION

The present invention generally relates to wireless local area networks or WLANs that comply with a series of standards globally known as "802.11" issued by the US Institute of Electrical and Electronics Engineers or IEEE. The invention more specifically relates to decoder products developed for "802.11n" and later versions of the standard operating in a multi-antenna or MIMO (multiple-input, multiple-output) environment that share the available transmission bandwidth with a digital encoding technique known as OFDM (orthogonal frequency-division multiplexing).

BACKGROUND OF THE INVENTION

Orthogonal frequency-division multiplexing or OFDM is a technique which consists in splitting a wideband signal over many orthogonal narrowband subcarrier signals. The data is divided into several parallel data streams, one for each subcarrier. Each subcarrier is modulated with a conventional modulation scheme such as phase-shift keying (PSK) or quadrature amplitude modulation (QAM) at a lower rate, maintaining total data rates similar to conventional single-carrier modulation schemes occupying the same bandwidth though. Above modulation schemes allow data symbols to be defined in a complex plane under the form of a two-dimensional scatter diagram or constellation of points. For example, a rectangular 16-QAM encoding can be performed on every transmitted 4-bit of data defining a constellation of 16 different states in a complex plane and forming a data symbol.

The primary advantage of OFDM over single-carrier schemes is its ability to cope with severe channel conditions; especially, with frequency-selective fading due to multiple transmission paths commonly observed in urban and in confined indoor environments. Channel equalization is simplified because OFDM may be viewed as using many slowly modulated narrowband signals transmitting data symbols at a lower rate rather than a single fast modulated wideband signal.

Multiple-input, multiple-output or MIMO is an advanced physical layer technique that uses multiple antennas at both transmitting and receiving ends of a communication system. Antenna diversity allows quality and reliability of a wireless link experiencing, e.g., multipath transmission, to be significantly improved thus offering robustness and gain over single antenna schemes. MIMO may also serve to improve spectral efficiency of the transmission channel allowing different signals to be transmitted simultaneously by sharing, e.g., time-wise and frequency-wise, various transmit antennas while preserving decoding efficiency of the multi-antenna receiver. Thus, transmission capacity of MIMO systems can also be linearly increased with the number of transmit antennas particularly when transmission occurs in a rich multipath environment.

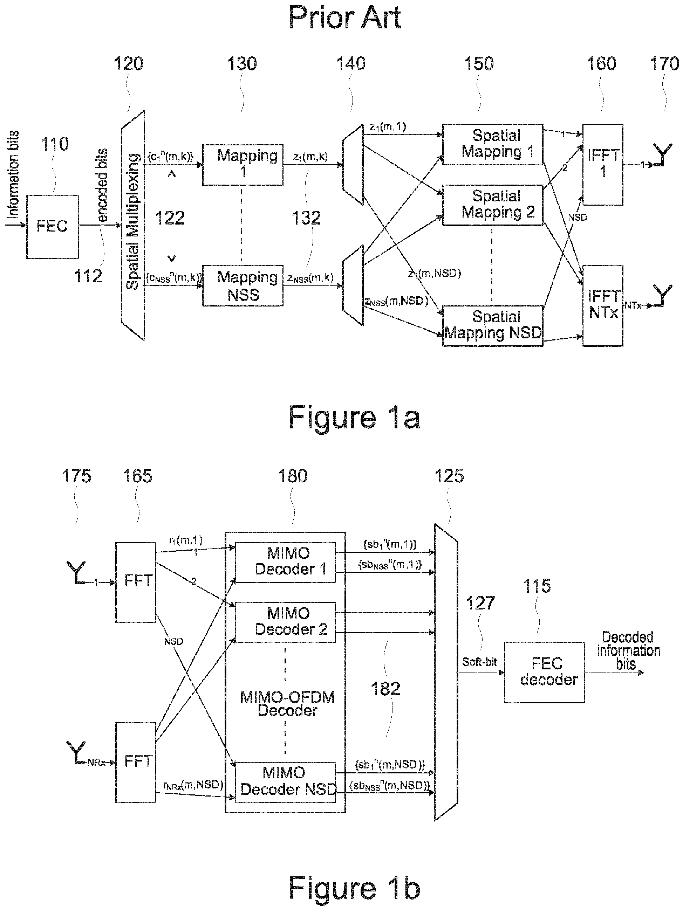

Figures 1a and 1b show a schematic representation of a transmission system of the kind briefly described above and that the invention is dedicated to enhance.

Figure 1a shows the transmit path of such a system in which the information bits to be broadcasted are first encoded with redundant bits through a convolutional encoder 110 so as to implement a forward error correction or FEC scheme in order to contribute to take care of all transmission impairments such as multipath fading mentioned above and noise that adversely affect the transmitted signals on their way to the receiver.

In the example of Figures 1a and 1b, NSS is the number of spatial streams as defined below; NTx is the number of transmit antennas; NRx is the number of receive antennas; NSD is the number of OFDM subcarriers per spatial streams; Nb is the number of bits of each transmitted QAM constellation data symbol.

As shown in Figure 1a, after FEC encoding, a spatial multiplexing 120 of the encoded bits 112 is first performed so that the overall information to be transmitted can be spread over the set of available antennas 170. This is done, in this example, under the form of NSS spatial streams 122. NSS must be less than or equal to the number of antennas, i.e.: NTx and NRx. A mapping 130 of each spatial stream is carried out to get a series of modulated symbols 132 that are destined to be transported by the set of OFDM subcarriers mentioned above. At this stage, Nb bits extracted from the flow of encoded bits are multiplexed into modulated symbols; e.g. 16-state (4-bit) or 64-state (6-bit) QAM symbols are commonly used. As in all modern signal processing systems, the modulated symbols are first generated in digital form in the frequency domain using complex numbers to be later converted in the time domain through layer 160 implementing standard invert fast Fourier transform (IFFT) operators before proceeding with the broadcasting of the encoded signals over the set of transmit antennas 170.

Before broadcasting, the spatial streams of modulated symbols 132 are spread 140 over the set of available OFDM subcarriers. As mentioned above, there are NTx antennas each broadcasting NSD subcarriers. The spatial mapping functions 150, also called expansion blocks, are used to convert the NSS spatial streams 122 into NTx complex symbol streams. This is done on each subcarrier in a linear fashion, by multiplying vectors of length NSS by an NTx x NSS matrix. Each vector of length NSS is transmitted during one OFDM symbol and over a given subcarrier. The spatial expansion matrix may vary from one subcarrier to the other. The spatial expansion matrix is used, for example, to better adapt the transmission conditions to the characteristics of the channel.

Figure 1b shows the receiving path which is equipped with a set of NRx antennas 175. The receive signals are converted back to the frequency domain by layer 165 of fast Fourier transform (FFT) operators then processed by a set of MIMO-OFDM decoders 180. There are as many MIMO-OFDM decoders as there are subcarriers (NSD). The decoded streams of data 182, i.e., the streams $\{sb_j^n(m,k)\}$ are actually an estimate of the transmitted bit streams $\{c_j^n(m,k)\}$ (where n = 1:*Nb*). They are then multiplexed 125 to restore the flow of transmitted encoded bits. The transmitted bit streams 182 are restored with an associated probability or reliability (of bit being a 1 or a 0) and are traditionally designated as "soft bit" 127 in the literature on OFDM-MIMO decoders. Then, based on the reliability of the soft bits and redundancy that was included on transmit side within the flow of encoded bits 122, a soft-input FEC decoder 115 is implemented generally using the well-known Viterbi algorithm. This allows most likely sequences of received bits to be restored with a high reliability however depending on the environment and observed propagation conditions. After soft-input FEC decoding, the transmitted information bits are thus recovered.

The decoding of the signals received by MIMO decoders 180 shown in Figure 1b is a particularly complex task which is hence received considerable attention from the technical community of academic scientists and research and development groups working in the area of wireless communications. Among a plethora of publications on this subject a thorough analysis of all aspects of MIMO OFDM transmissions can be found, e.g., in a doctoral dissertation untitled *"MIMO OFDM for wireless LANs"* presented on April 14, 2004 at the University of Eindhoven, The Netherlands, by Albert van Zelst.

As thoroughly explained in the above document, in a MIMO transmission system such as briefly described above in connection with Figures 1a and 1b, the standard way of handling the overall characteristics of the transmission channel between several transmit and receive antennas is to define, in the frequency domain, a channel matrix, also called H-matrix. The channel coefficients forming the H-matrix are complex numbers characterizing all attenuations and phase shifts that are observed within the transmission channel between transmit and receive antennas. The above mentioned publication *"MIMO OFDM for wireless LANs"* describes an example of H-matrix, which is well known for a normally skilled person. Chapter 6.2.6 explains for instance how the H-matrix can be estimated.

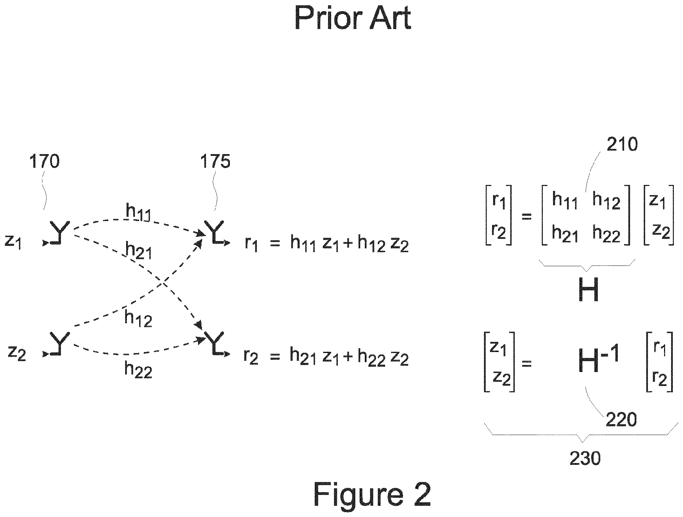

Figure 2 shows, as an example, a simplified view of a channel matrix 210 for a MIMO system that comprises only two transmit and two receive antennas. The H-matrix coefficients, i.e., the four complex numbers h11, h12, h21 and h22 of this simple example, represent the contribution of the transmission medium on the signals, z1 and z2, emitted by the transmit antennas 170, to the signals, r1 and r2, captured by the receive antennas 175.

Mathematically, a MIMO transmission system can thus be seen as a set of equations with a number of unknowns, i.e. the transmitted signals. Said set of equations is solvable when H-matrix 210 is invertible which is mostly made possible for all practical purposes. To estimate the transmitted signals 230 at the receiver through standard mathematical manipulations, the received signals, r1 and r2, must be then multiplied by the inverse 220 of the H-matrix 210 so that to obtain a so-called linear "equalization" of the transmission channel. To that end, it is assumed that the H-matrix is known at the receiver end. This is traditionally achieved by prepending to each transmitted data packet, in a preamble, one or more training fields that are known to the receiver and from which the H-matrix coefficients are first estimated and used while receiving the rest of the packet.

Known optimal algorithms for decoding data symbols transmitted in a MIMO system make use of the so-called maximum likelihood or ML decoding techniques based on the maximum a posteriori probability (MAP). The reliability of each decoded bit (soft-bit) is estimated directly on the basis of a likelihood ratio criterion. More precisely, the logarithm is used to define log-likelihood ratios (LLR), each indicating the reliability of a bit of the transmitted data symbols. This type of algorithm is for instance discussed in the above mentioned publication untitled *"MIMO OFDM for wireless LANs"* by Albert van Zelst, for instance at chapter 4.10.4, or in the publication *"New Soft Stack Decoder for MIMO Channel"* by Abdellatif Salah and al. in proceedings of *"Asilomar Conference on Signals, Systems, and Computers"* held in 2008. Then, using the Bayes rule on conditional probabilities each soft-bit value can be calculated.

More particularly, in the framework of soft-output ML detectors, if we call $c_j^n(k)$ the nth bit of the modulated symbol transmitted on the jth stream on the kth subcarrier; $\boldsymbol{z}(k)$ the NSS-dimension modulated symbol formed from $\{c_j^n(k)\}$, and $\boldsymbol{H}(k)$ the NRx x NSS MIMO channel, the NRx-dimension received signal r(k) verifies:

$$r(k) = \boldsymbol{H}(k)\boldsymbol{z}(k)$$

As already known, the most likely transmitted MIMO symbol on the kth subcarrier is given by $\boldsymbol{z}_{ml}(k)$:

$$\boldsymbol{z}_{ml}(k) = \arg\min_{\boldsymbol{z}} \|\boldsymbol{r}(k) - \boldsymbol{H}(k)\boldsymbol{z}\|$$

The optimal soft-bit would be the exact LLR (log-likelihood ratio) of the coded bit expressed as:

$$LLR\big(c_j^n(k)\big) = \log\left(\frac{p\big(c_j^n(k) = 1\big|r(k)\big)}{p\big(c_j^n(k) = 0\big|r(k)\big)}\right)$$

Using some approximations, among which the *max-log* approximation, the LLR formula becomes:

$$LLR\big(c_j^n(k)\big) \sim \operatorname*{argmin}_{\boldsymbol{z}\,\in X_{i,n}^{(0)}} \|\boldsymbol{r}(k) - \boldsymbol{H}(k)\boldsymbol{z}\|^2 - \operatorname*{argmin}_{\boldsymbol{z}\,\in X_{i,n}^{(1)}} \|\boldsymbol{r}(k) - \boldsymbol{H}(k)\boldsymbol{z}\|^2$$

where $X_{i,n}^{(u)}$ lists all existing modulated symbols for which the nth bit of the ith stream is equal to u = {0,1}.

If soft-output ML detectors are potentially optimal and may fully exploit the available MIMO diversity, unfortunately, the computational complexity of a direct implementation of this kind of detectors grows exponentially with the number of spatial streams (NSS) and modulation size of the data symbols (Nb) to soon become impracticable. Hence, many near ML decoding techniques, much less computationally demanding than ML detectors, have rather been proposed.

Owing to the world-wide proliferation of wireless networks, the design of soft-output MIMO decoders is nowadays a subject that has received a lot of attention from the research and development teams involved. In general terms, such a decoder typically applies the same formula as the last one given above to compute the LLR, except that only subsets of $X_{i,n}^{(0)}$ and $X_{i,n}^{(1)}$ are used. If this subsets include respectively $\operatorname{argmin}_{\boldsymbol{z}\,\in X_{i,n}^{(0)}} \|\boldsymbol{r}(k) - \boldsymbol{H}(k)\boldsymbol{z}\|^2$ and $\operatorname{argmin}_{\boldsymbol{z}\,\in X_{i,n}^{(1)}} \|\boldsymbol{r}(k) - \boldsymbol{H}(k)\boldsymbol{z}\|^2$, then the LLR is perfectly computed; otherwise the computation is affected. Thus a soft-output MIMO decoder consists of a list generator that finds a set of candidate data symbols and a LLR generator that calculated the soft-output bit values corresponding to said set of candidate data symbols; the main challenge is to define the *ad hoc* subsets of $X_{i,n}^{(0)}$ and $X_{i,n}^{(1)}$, these subsets being called 'list of candidates'. An abundant literature dealing with this problem is available.

Among the solutions that have been proposed a well-known algorithm is the so-called list "sphere" decoder. The basic premise in sphere decoding is to reduce the search space (and hence the corresponding required computational resources) to a sphere around a vector representing a lattice point of, e.g., a QAM constellation of points. Said vector is considered as the center of said sphere and may be initially defined by using sub-optimal output decoders, such as Zero-Forcing (ZF) decoders. Further to the list "sphere" decoder, well-known algorithms are the "Fano" decoders based on an algorithm named after Robert Fano, and the "stack" decoders. The main difference between these two decoders is that stack version stores all the paths crossed by the algorithm in an ordered list called "stack" or "memory" whereas the Fano decoder needs only to retain the best path and requires less storage space.

Most of algorithms for soft-output MIMO decoders can boil down to perform tree searches, and more particularly non-exhaustive tree searches. Indeed, a tree structure can generally be derived on which searches can be done very efficiently. Usually, a so-called QR decomposition of the channel matrix H described above can be performed, then the problem is converted to a tree search problem by multiplying the real version of the received MIMO data symbol $\tilde{r}(k)$ by the matrix Q resulting from the QR decomposition of the channel matrix $\tilde{H}$:

$$\operatorname{argmin}_{\boldsymbol{z}\,\in X_{i,n}^{(0)}} \|\boldsymbol{r}(k) - \boldsymbol{H}(k)\boldsymbol{z}\|^2 = \operatorname{argmin}_{\boldsymbol{z}\,\in X_{i,n}^{(0)}} \|\boldsymbol{Q}(k)^H \tilde{r}(k) - \boldsymbol{R}(k)\tilde{\boldsymbol{z}}\|^2$$

and

$$\text{argmin}_{z \in X_{i,n}^{(1)}} \|r(k) - H(k)z\|^2 = \text{argmin}_{z \in X_{i,n}^{(1)}} \|Q(k)^H \tilde{r}(k) - R(k)\tilde{z}\|^2.$$

$$\tilde{r} = \begin{bmatrix} real(r) \\ imag(r) \end{bmatrix} \quad \tilde{z} = \begin{bmatrix} real(z) \\ imag(z) \end{bmatrix} \quad \tilde{H} = \begin{bmatrix} real(H) & -imag(H) \\ imag(H) & real(H) \end{bmatrix}$$

Decoders using this kind of algorithms are usually named sequential decoders.

Using such sequential decoders, a list of candidates for LLR computation can be obtained by considering the metrics $\|Q(k)^H\tilde{r}(k) - R(k)\tilde{z}\|^2$. Using the tree structure, one can compute the metrics $\|Q(k)^H\tilde{r}(k) - R(k)\tilde{z}\|^2$ recursively. Indeed, by pruning the tree below certain nodes, tree search algorithms are used recursively to define efficiently a list of candidates, such that the paths leading to the searched solution, i.e. $\text{argmin}_{z \in X_{i,n}^{(0)}} \|r(k) - H(k)z\|^2$ and $\text{argmin}_{z \in X_{i,n}^{(1)}} \|r(k) - H(k)z\|^2,$ are preferably not discarded. Different tree pruning strategies have been proposed among which one finds the list sphere decoding, the stack decoding and the Fano decoding for instance.

Each recursion of a tree search may be considered as consisting in:

- starting from a root node, then generating iteratively children nodes, along a path through the tree, preferably until reaching a leaf node of the tree,
- computing the metrics (or cost) of the path (or candidate),
- storing the path with its computed metrics into a list, and
- pruning the already explored path from the tree, before a subsequent traversal of the tree.

Moreover, the triangular structure of the R matrix enables the sequential decoder to decompose the equivalent cost function $\|Q(k)^H\tilde{r}(k) - R(k)\tilde{z}\|^2$ as the sum of partial branches. The summation leads naturally to a representation in a weighted tree structure. Each partial traversal of the tree can be considered as a subsequent recursion starting from a node different from the root node, chosen among the ones already visited and defined in accordance with the pruning strategy.

From the generated list of candidates, once this latter is complete, the above LLR formula is computed for determining, among the candidates, the best estimate of the transmitted data symbol.

The performance of soft output MIMO decoders depends on the list of candidates obtained. Indeed, to get an accurate LLR, the list of candidates should contain not only the hard ML solution but also the contrary hypothesis symbol. The complexity of the algorithm is mainly related to the number of tree nodes that have been visited to obtain said list of candidates.

As stated in the introduction of the article untitled *"Soft-output Sphere Decoding: Performance and Implementation Aspects"* from C. Studer et al. and published in 2006 Fortieth Asilomar Conference on Signals, Systems and Computers*, it is known that the computational complexity of a soft-output MIMO detection algorithm by exhaustive or non-exhaustive tree search depends on the instantaneous MIMO channel realization and the signal-to-noise ratio (SNR) (or signal-to-interference ratio (SIR)). This paper presents curves showing the number of visited nodes as a function of the SNR. It is known for example that the complexity of sphere decoding algorithm is expected to be polynomial though it can be exponential in worst case. So such algorithms cannot efficiently be implemented in Very-large-scale integration (VLSI).

As mentioned in US patent 8,194,798 issued on June 5, 2012, untitled *"MIMO symbol decoder and method for decoding spatially multiplexed symbols using combined linear equalization and maximum likelihood decoding",* one remaining issue with the decoding process is that a tradeoff between complexity and performance must still be applied to stay within the available computational resources of the decoder. Indeed, there is a significant increase in decoding complexity when higher decoding performance levels are required, especially for higher modulation levels, i.e. constellation size (Nb) and when a greater number of spatial streams (NSS) is needed. To bring an answer to this challenge, the above patent, as the title suggests, combines linear equalization and maximum likelihood in a same decoder.

Another patent document referred to as US 2009/0141835 A1 proposes to use a two steps approach for achieving an enhanced tradeoff between complexity and performance. In a first step, it is proposed to use a sub-optimal linear equalizer, namely Minimum Mean Square Error (MMSE)-nulling equalizer, to initialize the list selection process. Then, it is proposed to select several candidate symbols around the initial symbol. The channel condition is evaluated to decide how many symbols around the initial symbol should be put into the list. Because the algorithm proposed by US 2009/0141835 A1 uses a linear equalizer as an initial step, it may not select the best symbols into its list. Thus, with bad channel conditions, it is needed to have a lot of symbols in the list to try to counterbalance the sub-optimal method for initializing the list selection process.

It is thus an object of the invention to further enhance the capability of realizing a better tradeoff between complexity and performance in a soft-output MIMO decoder. It is another object of the invention to provide another way of realizing the tradeoff between complexity and performance in a soft-output MIMO decoder.

Further objects, features and advantages of the present invention will become apparent to the ones skilled in the art upon examination of the following description in reference to the accompanying drawings. It is intended that any additional advantages be incorporated herein.

## SUMMARY OF THE INVENTION

According to an embodiment, the invention relates to a soft-output multiple-input multiple-output (MIMO) orthogonal frequency-division multiplexing (OFDM) decoder that comprises:

a soft-output MIMO OFDM decoder layer comprising a plurality of soft-output MIMO OFDM decoder units for decoding a plurality of encoded data symbols multiplexed into a plurality of NSS spatial streams transported through a transmission channel over a plurality of NSD subcarriers, one unit being provided per subcarrier, each unit comprising:

- a calculator configured to perform a QR decomposition of a channel matrix H characterizing the transmission channel through which the NSS spatial streams are transported and further configured to accordingly generate a tree structure,
- a list generator configured to implement a recursive algorithm to define a list of candidate data symbols by performing a tree search on said tree structure, with each computation iteration of said recursive algorithm consisting in processing one node of the tree, and
- a log-likelihood ratio (LLR) generator configured to compute a soft-output bit values corresponding to said list of candidate data symbols and to output corresponding decoded streams of data,

such that it further comprises:

- a channel quality estimator configured to estimate, for each spatial stream, a quality of each subcarrier among said plurality of subcarriers; and
- an iterations allocator configured to set a number of computation iterations to be allocated to each unit of said soft-output MIMO OFDM decoder layer on the basis of the quality of the corresponding subcarrier as estimated by the channel quality estimator and under the constraint that a total number of computation iterations SIT allocated over the NSD subcarriers is predetermined.

Advantageously, this allows each decoding unit to be attributed computational resources i.e. computation iterations, just adapted to the observed quality (estimated by the channel quality estimator) of the received subcarrier signal.

Preferably and according to an advantageous embodiment, the overall number of iterations assigned by the iterations allocator is inferior or equal to a bounded upper value.

Therefore, the present invention allocates to each ML symbol decoding a number of iterations adapted to the quality of the considered subcarrier under, the sum of the iterations over the subcarriers staying constant. The available computational resources are thereby distributed in an optimal way significantly improving the overall performance of the decoder. Thus, the invention takes advantage of the frequency diversity brought by OFDM systems to reduce the global complexity without affecting the performance.

Optionally, the decoder of the invention may comprise any one of the following facultative features taken separately or in combination:

- the iterations allocator is configured to allocate more computation iterations to decode a subcarrier having a less good quality than to another subcarrier having a better quality;
- the total number of computation iterations is predetermined in function of at least one among the available computational resources, a processing time allocated to decoding of said plurality of data symbols, the available memory space and a mix thereof;
- the channel quality estimator is configured to estimate the quality of each subcarrier in function of at least one among the channel matrix H and a noise variance of said transmission channel; the channel quality estimator is more particularly configured to estimate, for each $k^{th}$ subcarrier, the quality of each $j^{th}$ spatial stream according to any one among the three following equations:

$$O_j(k) = \frac{1}{\left[\left(H(k)^H H(k)\right)^{-1}\right]_{jj}},$$

$$O_j(k) = \frac{1}{\left[\left(\sigma^2 I_{NSS} + H(k)^H H(k)\right)^{-1}\right]_{jj}} - 1,$$

and

$$O_j(k) = \frac{\sum_{i \neq j} |h_i^H(k) h_j(k)|}{h_j^H(k) h_j(k)},$$

where:

- $j = 1, ..., NSS,$
- $[X]_{jj}$ are the diagonal elements of matrix X,
- $\sigma^2$ is the noise variance of the transmission channel, and
- $I_{NSS}$ is a unity matrix of size NSS;

- the iterations allocator is configured to set the number of computation iterations to be allocated to each unit according to the following equation:

$$SI(k) = \alpha\, C(k) + \beta,$$

where $C(k)$ is a function of the estimated quality of the k$^{th}$ subcarrier and where $\alpha$ and $\beta$ are determined by taking into account the total number of computation iterations SIT; the function $C(k)$ is further proportional, or even equal, to a signal-to-interference ratio of the k$^{th}$ subcarrier.
- According to a first embodiment, when, for one k$^{th}$ subcarrier, the quality of one j$^{th}$ spatial stream is superior to a determined threshold value, the iterations allocator is configured to reset the number of computation iterations to be allocated to the corresponding unit equal to a minimum number of iterations SIm, with this latter being inferior to the average number of iterations allocated per subcarrier; assuming that $\alpha$ and NSm, the number of subcarriers for which the number of computation iterations is forced to the minimum number of iterations SIm, are known, $\beta$ is given by the following processing performed by the iterations allocator:

$$\beta = \frac{1}{NSD - NSm}\left(SIT - NSm.SIm - \alpha \sum_{\substack{k=NSm \\ +1}}^{NSD} C(d(k))\right)$$

where d is a sorted function of the C(k) quantities from the highest to the lowest;
- According to a second embodiment, assuming that $\alpha$ is known, $\beta$ and NSm, the number of subcarriers for which the number of computation iterations is forced to the minimum number of iterations SIm, are jointly evaluated with the following processing performed by the iterations allocator:

  - Compute all the B(p) and D(p) values for all integer values $p$, with $p < NSD$:

$$B(p) = \frac{1}{NSD - p}\left(SIT - p.SIm - \alpha \sum_{k=p+1}^{NSD} C(d(k))\right)$$

$$D(p) = \text{card}\{1 \leq k \leq NSD \mid [\alpha\, C(k) + B(p)] < SIm\}$$

- Select the $\beta$ solution corresponding to the largest *NSm* according to:

$$NSm = \underset{p}{\mathrm{argmax}}\, D(p)$$

$$\beta = B(NSm)$$

- Compute, for each subcarrier, the number of computation iterations as:

$$SI(k) = \max([\alpha\, C(k) + \beta], SIm).$$

- The soft-output MIMO OFDM decoder may further comprise at least one among:

  - a layer of fast Fourier transform (FFT) operators configured to convert the NRx received signals to the frequency domain before generating said tree structure and before estimating the quality of each subcarrier, and
  - a multiplexing layer configured to multiplex the decoded streams of data outputted from the LLR generator and a FEC decoder configured to output decoded information bits from the output of said multiplexing layer;

- Said recursive algorithm is designed for performing partial traversals of the tree structure according to a determined pruning strategy;
- The soft-output MIMO OFDM decoder may further comprise a set of NRx antennas for receiving the spatial streams.

According to another aspect, the invention relates to a soft-output MIMO OFDM decoding method that comprises:
with a soft-output MIMO OFDM decoder layer comprising a plurality of soft-output MIMO OFDM decoder units for decoding a plurality of encoded data symbols multiplexed into a plurality of NSS spatial streams transported through a transmission channel over a plurality of NSD subcarriers, one unit being provided per subcarrier, each unit implementing the following steps of the method:

- performing, by using a calculator configured to, a QR decomposition of a channel matrix H characterizing the transmission channel through which the NSS spatial streams are transported and further accordingly generating a tree structure,
- implementing, by using a list generator configured to, a recursive algorithm to define a list of candidate data symbols by performing a tree search on said tree structure, with each computation iteration of said recursive algorithm consisting in processing one node of the tree, and
- computing, by using a log-likelihood ratio (LLR) generator configured to, a soft-output bit values corresponding to said list of candidate data symbols and outputting corresponding decoded streams of data,

the method further comprising:

- estimating, by using a channel quality estimator configured to, for each spatial stream, a quality of each subcarrier among said plurality of subcarriers; and
- setting, by using an iterations allocator configured to, a number of computation iterations to be allocated to each unit of said soft-output MIMO OFDM decoder layer on the basis of the quality of the corresponding subcarrier as estimated by the channel quality estimator and under the constraint that a total number of computation iterations SIT allocated over the NSD subcarriers is predetermined.

According to another aspect, the invention relates to a computer-program product that contains software program instructions, where execution of the software program instructions by at least one data processor results in performance of operations that comprise execution of the steps of the method as in the invention.
According to another aspect the invention relates to a communication device comprising a soft-output MIMO OFDM decoder according to any one of the embodiments of the invention. The communication device is for example: a telephone, a computer, a tablet computer, a laptop computer, a watch, a media player, a device for collecting sensor measurements, a box with an ADSL modem, a video game console.

## BRIEF DESCRIPTION OF THE DRAWINGS

FIGURES 1a and 1b show, respectively, the transmit and receive legs of a standard OFDM-MIMO transmission system.

FIGURE 2 shows an example of a H-matrix use to characterize the transmission channel in a MIMO system.

FIGURE 3 shows the blocks added to a standard OFDM-MIMO decoder that are needed to operate the invention.

FIGURE 4 is a general flow chart of the invention.

FIGURE 5 shows simulation results and comparison with standard decoders.

FIGURE 6 shows that a minimum number of iterations is attributed to each subcarrier.

FIGURE 7 shows an example of a partial tree structure illustrating an embodiment according to the invention.

## DETAILED DESCRIPTION

The following detailed description of the invention refers to the accompanying drawings. While the description includes exemplary embodiments, other embodiments are possible, and changes may be made to the embodiments described without departing from the spirit and scope of the invention.

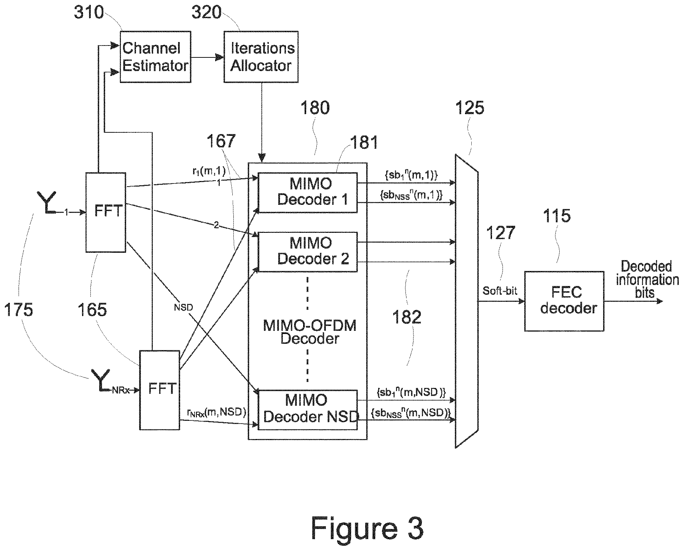

As shown in figure 3, within decoding layer 180, one soft-output MIMO-OFDM decoder unit 181 is run per subcarrier. Thus, there are NSD decoder units in layer 180. Each decoder unit, such as 181, receives the corresponding subcarrier 167 coming from the different receive antennas 175 through the FFT layer 165. The soft-output MIMO-OFDM decoder units of the invention embed a sequential decoder implementing a recursive algorithm to define a list of candidates by performing a tree search. As discussed before in the state of the art section, each computation iteration of said recursive algorithm consists in processing one node in the tree.

An aspect of the present invention consists in allocating, to each of the NSD decoder units, a number of computation iterations adapted to the quality of the received subcarrier under the constraint that the sum of the iterations over the NSD subcarriers is predetermined and for instance stays constant. This way, one can limit the processing time of the decoding process. To this end, as illustrated on figure 3, two processing blocks are added to the receiver of the previous art shown in figure 1b, i.e.: a channel quality estimator 310 aimed at determining the quality of each subcarrier and an iterations allocator 320 intended to allocate an *ad hoc* number of computation iterations to the NSD decoder units as a function of the subcarriers quality.

The total number of iterations per OFDM symbol to be decoded is then predetermined, and so can be made constant, or is bounded to an upper limit which makes the system implementable. The total number of available iterations per each received set of OFDM symbols may be predetermined in function of at least one among the (current) available computational resources, a processing time allocated (or allocatable) to decoding of said received set of OFDM symbols, the available memory space and a (weighted or conditional) mix thereof. The total number of available iterations thus predetermined is distributed in an optimal way, for achieving a significant improvement of the overall performance of the decoder.

The invention is based on the idea that a small number of computation iterations should be allocated to the decoding of subcarriers benefiting of good transmission conditions and a larger number to the others. The allocation of a particular number of iterations to decode a subcarrier may be calculated in function of at least one among the channel matrix estimate, $H(k)$, and the noise variance of the channel. Depending on the environment and particular applications of the invention, the allocation of iterations can be however done in function of other parameters which depict the quality of each MIMO channel. Moreover, predetermination of the number of iterations per received OFDM symbol, as well as predetermination of the total number of iterations per each received set of OFDM symbols, may be done once for all or may be timely (or even periodically) readjusted with respect to at least one among the current available computational resources, a newly allocated (or allocatable) processing time and/or memory space, and the current quality of MIMO channels.

An example of a preferred algorithm for allocating the computation iterations is described hereafter. Its formal description is first presented according to which:

- NSD is the number of subcarriers received at the decoder and over which data symbols are transported;
- NSS is the number of spatial streams, i.e. the number of signals simultaneously transmitted. NSS is also the number of columns of the H-matrix, NRx being the number of rows of the H-matrix;
- SI(k) is the number of iterations allocated to the kth subcarrier;
- SIT is the total number of iterations allocated over the NSD subcarriers, $SIT = \Sigma_k \, SI(k)$. In other words, SIT is the overall number of computation iterations allocated to the plurality of soft-output MIMO-OFDM decoder units;
- SITmax is the maximum number of iterations allocatable over the NSD subcarriers, with the constraint that $SIT \leq$

*SITmax.* Ideally, *SIT = SITmax;*

- SIm is the minimum number of iterations allocated per subcarrier. The average number of iterations per subcarrier, i.e.: SIT/NSD, must be superior to SIm;
- SITmin is the minimum number of iterations allocated over the NSD subcarriers, with *SITmin ≥ NSD × SIm;*
- NSm is the number of subcarriers for which the number of allocated iterations is forced to the minimum number of iterations, i.e. SIm, with *NSm ≤ NSD.*

The SIT total number of iterations is allocated among the NSD subcarriers according to the channel conditions.

The quality of a MIMO channel is link to the invertibility (or "capability of inversion") of the H-matrix characterizing the channel. There are several criteria for expressing the quality of each jth spatial stream for each subcarrier in function of the H-matrix. One criterion is given by each of the three following equations:

1. $$O_j(k) = \frac{1}{\left[\left(H(k)^H H(k)\right)^{-1}\right]_{jj}},$$

2. $$O_j(k) = \frac{1}{\left[\left(\sigma^2 I_{NSS} + H(k)^H H(k)\right)^{-1}\right]_{jj}} - 1,$$   and

3. $$O_j(k) = \frac{\sum_{i \neq j} |h_i^H(k) h_j(k)|}{h_j^H(k) h_j(k)},$$   with $j = 1,..., NSS$ and where:

- $[X]_{jj}$ are the diagonal elements of the matrix X,
- $\sigma^2$ is the noise variance, and
- $I_{NSS}$ is the unity matrix of size NSS.

The first equation for $O_j(k)$ is closely related to the covariance matrix of a zero-forcing equalizer. The second equation for $O_j(k)$ is closely related to the covariance matrix of a MMSE equalizer. The third equation for $O_j(k)$ is closely related to the correlation between the streams.

Whatever the chosen criterion is, the number of computation iterations allocated to each kth subcarrier is a function of a corresponding set of quality parameters $\{C(k)\}$ wich depends on the set $\{O_j(k)\}_{j=1,...,NSS}$.

A linear equation may be used to define the number of iterations allocated to the kth subcarrier:

$$SI(k) = \alpha\, C(k) + \beta,$$

where $C(k)$ is an empirical function of the set $\{O_j(k)\}_{j=1,...,NSS}$.

Other equation formulations may be alternatively used for expressing *SI(k),* such as a quadratic equation. Nonetheless, such an alternative would render more complex, or even impossible without additional assumption(s), the subsequent computations. Another alternative example consists in generating a look-up table which allows allocating a suitable value to SI for a given range of values of C; such a look-up table may be pre-computed.

In accordance with the above given formal description and the aforementioned equations, and by way of

$$C(k) = SIR(k) = 10 \log 10 \sum_{j=1}^{Nss} \frac{1}{[O_j(k)]},$$   with SIR(k) being

exemplary and non-limiting choice, we can set:   the signal-to-interference ratio for the kth subcarrier.

As discussed previously, H is the matrix characterizing the transmission channel and may be evaluated according to different well-known manners. In view of the aforementioned equations, it comes that knowledge of the H-matrix allows to compute each C(k).

There are also different solutions to compute the parameters $\alpha$, $\beta$ and NSm. Two different solutions are given below.

For instance, assuming that $\alpha$ and NSm are known, then $\beta$ is given by the following formula:

$$\beta = \frac{1}{NSD - NSm}\left(SIT - NSm.SIm - \alpha \sum_{\substack{k=NSm \\ +1}}^{NSD} C(d(k))\right)$$

where d is a sorted function of the NSD C(k) quantities. The C(k) are sorted from the highest to the lowest, that is from the best channel conditions to the worst ones. $\alpha$ and NSm may be user defined parameters. More particularly, $\alpha$ may be defined by simulation evaluating algorithm performance for different trials of $\alpha$ value taken between - 30 and - 0.1, preferably between -15 and -1, for instance equal to -10. NSm may be defined heuristically as a ratio of NSD, the number of subcarriers received at the decoder. For instance, $NSm = E(NSD/N)$, where E is the floor function and N is for instance an integer value comprised between 2 and 10, for instance N=4.

Alternatively, and in the preferred embodiment of the allocation algorithm according to the invention, only $\alpha$ is a user defined parameter and $\beta$ and NSm are jointly evaluated. As previously, $\alpha$ may be defined by simulation evaluating algorithm performance for different trials of $\alpha$ value taken between - 30 and - 0.1, preferably between -15 and -1, for instance equal to -10.

Then, $\beta$ and NSm are jointly evaluated for instance with the following processing:

1. Compute all the B(p) and D(p) values for all integer values p, with $p < NSD:$

$$B(p) = \frac{1}{NSD - p}\left( SIT - p.SIm - \alpha \sum_{k=p+1}^{NSD} C(d(k)) \right)$$

$$D(p) = \mathrm{card}\{1 \leq k \leq NSD \mid [\alpha\, C(k) + B(p)] < SIm\}$$

2. Select the $\beta$ solution corresponding to the largest NSm:

$$NSm = \underset{p}{\mathrm{argmax}}\, D(p)$$

$$\beta = B(NSm)$$

3. Compute, for each subcarrier, the number of iterations:

$$SI(k) = \max([\alpha\, C(k) + \beta], SIm)$$

Taking Nsm as the maximum value of D(p) may be considered as a sub-optimal solution, but this latter allows to naturally meet the constraint that $\sum_{k=1}^{NSD} SI(k) = SIT \leq SITmax.$

Other choices than a 'max' function for computing NSm at step 1 above may be considered which should be more optimal, but which may require to verify that the corresponding total number of computation iterations SIT is less than, and preferably approaching, SITmax. If not, another $\alpha$ value may be tried.

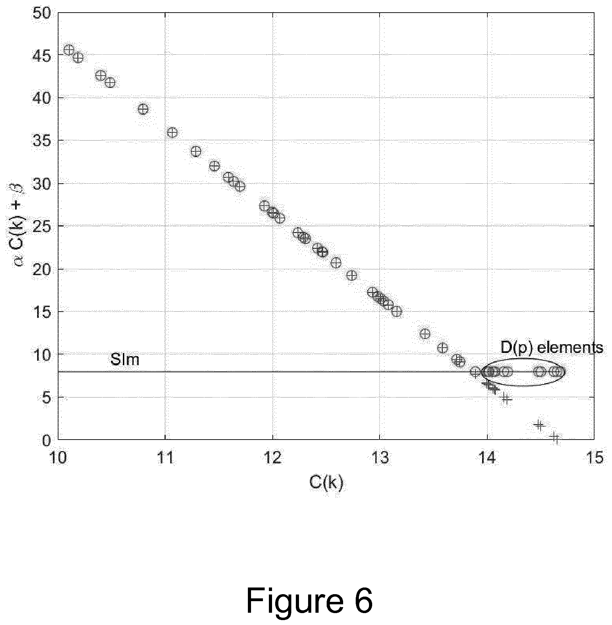

Figure 6 graphically illustrates the result of the above described way to set the parameters $\alpha$, $\beta$ and NSm. On this figure, each cross is related to one subcarrier k and has the same abscissa than one circle. The values of $\alpha\, C(k)$ are naturally sorted when projected on the horizontal axis. The vertical axis gives the number of computation iterations $SI(k) = [\alpha\, C(k) + \beta]$ for each subcarrier $k$, with $\beta = B(p)$ and $NSm = D(p)$. In general, the number of computation iterations SIT is equal to $[\alpha\, C(k) + B(p)]$, i.e. it is on the line roughly define by the crosses. But, for each of the D(p) highest values of C(k), the number of computation iterations SIT is forced to SIm. In the illustration of figure 6, $D(p) > 5$; there are more than five of the NSD decoding units to which SIm computation iterations are allocated.

SIm, the minimum number of iterations allocated per subcarrier, may be user defined parameter. For instance, one can set SIm equal to at least once the depth of the tree, i.e. $SIm \geq 2 * NSS;$ the choice $SIm = 2 * NSS$ corresponds to the number of iterations needed to reach a leaf of the tree, starting from the root and in case of no noise. Typically, one can choose $SIm = 8 * NSS$ with consideration to the available computing resources.

For another example, one can define SIm by evaluating an average number of computation iterations needed for searching through the tree once or twice from the root node to a leaf node, then one can set SIm equal to this average number or SITmin equal to NSD times said average number. Thus SIm or SITmin may be defined so that the generated list of candidates comprises at least one complete first candidate.

Nonetheless, if no candidate is generated after the SIm, or even SI(k), computation iterations, one can set the corresponding soft-bits to zero so that this lack of data could be subsequently detected and corrected by using a FEC decoder 115 at the output of the multiplexing layer 125, as illustrated on figure 3. Thus it is not compulsory to generate at least one complete candidate.

Note that predetermining the number of computation iterations to be allocated to each subcarrier implies that, with each recursion comprising several computation iterations, a certain number of recursions would be performed by the recursive algorithm performing the tree search. Thus, for a given recursive algorithm, that could lead to a targeted number candidates K to be defined and potentially put into the list of candidate data symbols. It could thus be considered that SI(k) gives the number of computation iterations required to get at least K candidates, preferably with a high probability, for a given recursive algorithm. Nonetheless, this is not the concern of the present invention to predetermine, or even evaluate, the number of visited candidates. On the contrary, the invention allows avoiding drawbacks which would come from such an approach, especially if one chooses to use a recursive algorithm designed for performing partial traversals of the tree structure.

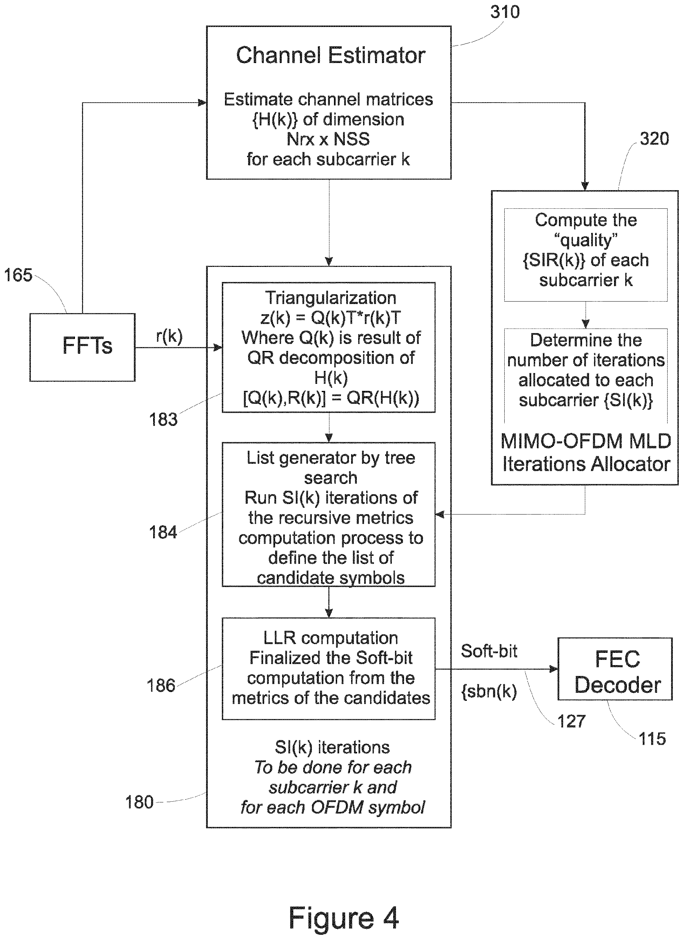

The general flow chart of the invention including the above allocation algorithm is summarized in **Figure 4.** The main processing steps performed by the channel quality estimator 310 to obtain an estimate of the quality of the received subcarriers are briefly described hereafter.

The coefficients of channel matrices $\{H(k)\}$ of dimension NRx x NSS for each subcarrier k are first estimated. This estimation is often obtained while receiving pilot/training symbols. For example, in 802.11n, MIMO channel and/or corresponding noise variance is estimated during the reception of the frame preamble, i.e., from a pilot symbol called HT-LTF field (for High Throughput-Long Training Field) transmitted for this purpose. Often, the channel and the noise variance are then assumed to stay constant during the reception of the whole frame so that the same channel and/or noise variance estimate is used for processing the complete frame. In other cases, where the channel and noise variance may vary during the reception of the frame, e.g., for each OFDM symbol, a new channel and/or noise variance estimate is preferably performed; the iteration allocator 320 may thus be updated for each OFDM symbol.

The quality of each subcarrier, as defined for instance by SIR(k), is computed from its channel estimate and/or its noise variance, for instance in accordance with one of the three above given criteria $O_j(k)$.

At completion of this process, the quality of subcarriers is established and the corresponding information is taken into account by the iterations allocator 320 for determining the number of iterations SI(k) allocated to each subcarrier using, for example, one of both allocation algorithms described above.

Knowing the number of computation iterations SI(k) allocated to each kth subcarrier and potentially for each OFDM symbol, decoding can then take place in processing layer 180 depicted on figure 3. The main steps of the decoding process are briefly described hereafter:

- At step 183, a "triangularization" is performed, i.e., the received MIMO symbol is multiplied by an orthogonal Q matrix resulting from the QR decomposition (i.e.: the product of the orthogonal Q matrix by an upper triangular matrix R) of the channel matrix H to obtain a tree structure.
- At step 184, the list of candidate is generated recursively. Using the previously obtained tree structure, a soft-output MIMO decoder units 181 computes metrics $\|Q(k)^H r(k) - R(k)z\|^2$ recursively. The soft-output MIMO decoder may be chosen for instance among: a list sphere decoder, a stack decoder and a Fano decoder. At each recursion, the tree structure is traversed iteratively, starting from the root node for visiting children nodes, preferably until reaching a leaf node. The number of computation iterations to be performed, and thus the number of nodes to be visited, is determined per subcarrier by SI(k) as previously computed. Any tree search algorithm may be implemented among the known ones. The tree search algorithm is preferably chosen among the ones having the best pruning strategies. When a leaf node is reached, the corresponding metrics is computed and is put, together with the corresponding symbol, in the candidates list. In alternative, the list of candidates is sorted in function of their metrics.

More particularly, for each kth subcarrier, before generating a first candidate, an iteration counter is initialized to zero. The iteration counter is increment by 1 each time a node of the tree is visited. After visiting each node or a determined number of nodes, for instance 10 nodes, the iteration counter is compared to SI(k), that is the number of iterations allocated to the kth subcarrier. If the iteration counter has a value strictly less than SI(k), then the tree search algorithm goes on and another node is visited. If the iteration counter has a value equal to SI(k), then the tree search algorithm ends.

The first visited node for each kth subcarrier is the root node, but the node visited after having reached a leaf node is not necessarily the root node again; it may be a node chosen among the ones already visited, in accordance with the pruning strategies of the chosen tree search algorithm. Thus, after visiting all children nodes of the selected one, the computation of the metric may actually comprise the computation of a corresponding partial metric of a partial candidate vector symbols as the sum of the parent metric (already known form the previously implemented recursion(s)) and the branch metric as defined by starting from the chosen node (different from the root node). Thus, according to the pruning strategy of the chosen tree search algorithm, more or less nodes are visited for decoding one data symbol.

- At step 186, the LLR computation is finalized from the metrics associated to the selected candidates for each subcarrier.

After the processing provided by the soft-output MIMO decoder units 181 of the processing layer 180, the following step of the decoding process is performed by the processing layer 125, as depicted on figure 3, and is the same than the one described in reference to figure 1b: the decoded streams of data 182 are multiplexed 125 to restore the flow of transmitted encoded bits.

At completion of the decoding process, soft bits 127 are generated which are inputted to the FEC decoder 115, most often a soft-input Viterbi decoder or a soft-input LDPC decoder, in order to be further corrected, if necessary. At this stage, the transmitted information bits are recovered.

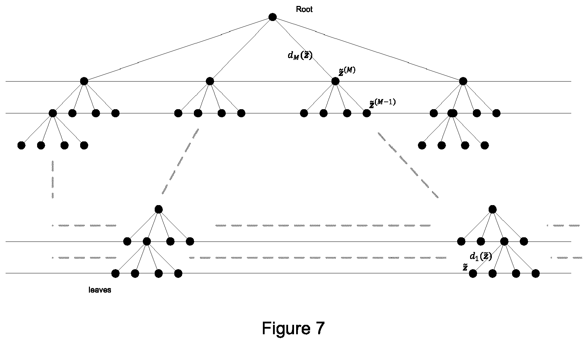

In order to go further with the ability of the decoder according to the invention to implement a tree search algorithm implying partial candidate vector symbols, the following section explains, with reference to Figure 7, how a tree search can be used in this case to calculate the metric:

$$\|\widetilde{y} - R(k)\widetilde{z}\|^2 \text{ with } \widetilde{y} = Q(k)^H \widetilde{r}(k),$$

where $\widetilde{r} = [\widetilde{r}_1, ..., \widetilde{r}_{2.NRx}]^t$ is a vector of dimension 2NRx x 1 and $\widetilde{z} = [\widetilde{z}_1, ..., \widetilde{z}_M]^t$ and $\widetilde{z} = [\widetilde{z}_1, ..., \widetilde{z}_M]^t$ are vectors of dimension Mx1 (M = 2NSS) and $R$ is a 2NSSx2NSS triangular matrix. $\widetilde{z}$ can take $K^M$ possible values. K is the number of possible values of each $\widetilde{z}_i$ element. It depends on the modulation method used. When a QAM modulation method is used, K depends on the QAM modulation size, K = 2^(Nb/2).

Let define the partial candidate vector symbols $\widetilde{z}^{(i)} = [z_i, ..., z_M]^t$ and $R^{(i)} = [R]_{i,i:M} = [R_{i,i}, R_{,...,}R_{i,M}]$, then:

$$d(\widetilde{z}) = \|\widetilde{y} - R\widetilde{z}\|^2 = \sum_{i=1}^{M} \left\|\widetilde{y}_i - R^{(i)}\widetilde{z}^{(i)}\right\|^2 = \sum_{i=1}^{M} d_i(\widetilde{z})$$

The distance $\|\widetilde{r} - R\widetilde{z}\|^2$ can be computed recursively as a sum of partial distances. Indeed, thanks to the upper triangular structure of $R$, each partial distance depends only on $\widetilde{z}^{(i)}$. The computation of each of the $K^M$ distance $d(\widetilde{z})$ can be interpreted as a traversal of the tree from the root to the leaf corresponding to $\widetilde{z}$. Each leaf corresponds to one of the $K^M$ possible value of $\widetilde{z}$. From each node to the next one, there are K connections because $\widetilde{z}^{(i)}$ and $\widetilde{z}^{(i+1)}$ differs only by one element $\widetilde{z}_{i+1}$ which can take K values. Each connection is a partial distance $d_i(\widetilde{z})$.

Visiting all the leaves nodes to find the ones with the smallest distance is very complex and consuming, or even impossible, in terms of computer resources. There exist several efficient tree search algorithms, such as the latter one described above, that reduce the complexity by visiting only a limited number of nodes, but such that the paths leading to the minimal distance leaves are not discarded.

When the tree search algorithm reaches a leaf node, then the symbol z associated to the path leading to this leaf node as well as the distance $d(\widetilde{z}(k))$ are stored in the candidates list $T(k)$. Then, this leaf node is "removed" from the tree and the tree search algorithm continues to explore the tree up to reaching another leaf node, etc.

With the above formalism implying partial candidate vector symbols, the soft-bit generation algorithm according to the invention may be expressed into two main steps, which are performed for each subcarrier k:

1. Identify/select a list $T(k)$ of NSS-dimension modulated symbols $\widetilde{z}$ and jointly compute for each symbol of the list, $\widetilde{z}(k) \in T(k)$, the distance $d(\widetilde{z}(k)) = \|\widetilde{y}(k) - R(k)\widetilde{z}(k)\|^2$
This first main step is achieved using a tree search algorithm as described previously.

2. For each coded bit $c_j^n(k)$, compute 186 a soft-bit $LLR\left(c_j^n(k)\right)$ as

$$LLR\left(c_j^n(k)\right) = \min_{\widetilde{z} \in T_{i,n}^{(0)}} d(\widetilde{z}(k)) - \min_{\widetilde{z} \in T_{i,n}^{(1)}} d(\widetilde{z}(k))$$

$T_{i,n}^{(u)}$ lists all the modulated symbols belonging to $T$ for which the nth bit of the jth stream is equal to u = {0,1}.

In the event the list $T_{i,n}^{(u)}$ is empty, the component $\min_{\tilde{\mathbf{z}} \in T_{i,n}^{(u)}} d(\tilde{\mathbf{z}}(k))$ in the above formula is replaced by a fixed value $M_{LLR}$. $M_{LLR}$ is a user defined parameter, it can be computed for instance to from the channel matrices of the different subcarriers as

$$M_{LLR} \sim \frac{\gamma}{NSD\ NSS} \sum_{j=1:NSS} \sum_{k=1:NSD} \frac{1}{\left[\left(H(k)^H H(k)\right)^{-1}\right]_{j,j}}$$

The $\gamma$ weight could be QAM-modulation dependent or set to 1.

This process according to an aspect of the invention goes up to a predefined number SI(k) of "iterations", with each iteration being the operation consisting in processing one node in the tree. The number of symbols in the list $T(k)$ once the number of iterations has been consumed is not known in advance. It can even be null.

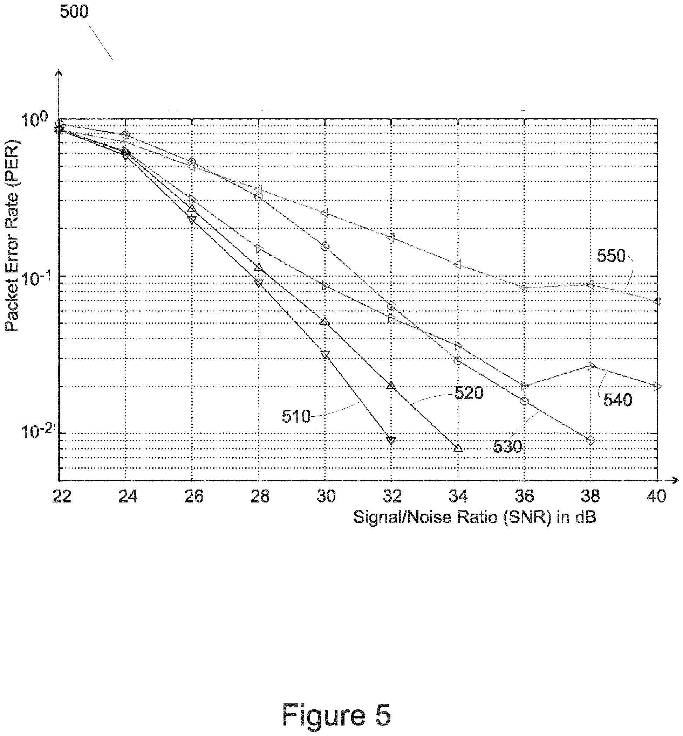

**Figure 5** shows in diagram 500 results of performance simulation of a decoder according to the invention compared to other implementations. The conditions of the simulations are as follows:

| | |
|---|---|
| Number of receive antennas (NRx): | 2 |
| Number of spatial stream (NSS): | 2 |
| Number of OFDM subcarriers (NSD): | 52 |
| Symbols: | 64-QAM |
| Channel model: | Multipath channel "D" |

Curve 510 corresponds to an ideal ML MIMO decoder and represents the asymptotic values towards which near ML MIMO decoder should tend to. Curve 530 corresponds to a decoder in which a linear equalization is performed of type said MMSE, i.e., "minimum mean square error" in this case. Curve 540 shows results obtained with a so-called "stack" MIMO decoder previously discussed for which a fixed number of 40 iterations is allocated per subcarrier. Curve 550 corresponds to the previous case with a fixed allocation of 20 iterations per subcarrier. Curve 520 shows results obtained with a so-called "stack" MIMO decoder, but enhanced according to the invention (that is with the two processing blocks 310, 320 added to the receiver) for which an average of 20 iterations is allocated per subcarrier. These results have been obtained with the FEC decoder contribution.

The best results are indeed obtained with a decoder of the invention where iterations are not allocated in a fixed manner but rather distributed according to actual subcarrier needs, i.e., with emphasis put on subcarriers experiencing bad transmission conditions which require more computational resources to be properly decoded. This allows total computational resources to be predetermined, and for instance to be kept constant or maintained below an upper bound. This makes the scheme of the invention easily implementable while obtaining packet error rates (PER) 520 closer to the ideal values 510.

If the channel conditions are good, then the tree search algorithm directly reaches the relevant leaf nodes in a minimum number of iterations whereas, if the channel conditions are bad, the tree-search algorithm would have to explore a lot of nodes before reaching relevant leaf nodes.

The present invention proposes to pre-compute the number of iterations allocated to each subcarrier as a function of the channel condition experienced by each subcarrier. This allows splitting among all the subcarriers a fixed budget of iterations in an "optimal" way. Then, the time required for processing all the subcarriers may be kept constant or continuously adapted to the current computing resources.

Blocks 310 and 320 of the soft-output MIMO decoder according to the invention act before the processing layer 180 by defining the number of computation iterations allocated to each subcarrier in function of the quality of the transmission channel. Advantageously, the allocation proceeding is uncorrelated to the soft-output decoding layer 180. Indeed the soft-output MIMO decoder according to the invention is able to implement, at the level of the soft-output decoding layer 180, any one of known soft-output MIMO decoding processes, and even any one of known tree search algorithms. Thus the soft-output MIMO decoder according to the invention provides an absolute compatibility with already existing and even future solutions for soft-output decoding of MIMO channels.

The foregoing description has provided, by way of exemplary and non-limiting examples, a full and informative description of various methods, apparatus for implementing the exemplary embodiments of this invention. However, various modifications and adaptations may become apparent to those skilled in the relevant arts in view of the foregoing description, when read in conjunction with the accompanying drawings and the appended claims. As but some examples, the use of other similar or equivalent algorithms and data representations may be attempted by those skilled in the art.

Further, the various names used for the different elements and functions (e.g., channel quality estimator, iteration allocator, etc.) are merely descriptive and are not intended to be read in a limiting sense, as these various elements and functions can be referred to by any suitable names. All such and similar modifications of the teachings of this invention will still fall within the scope of the claims of this invention.

Furthermore, some of the features of the exemplary embodiments of this invention may be used to advantage without the corresponding use of other features. As such, the foregoing description should be considered as merely illustrative of the principles, teachings and embodiments of this invention, and not in limitation thereof.

**Claims**

1. A soft-output multiple-input multiple-output (MIMO) orthogonal frequency-division multiplexing (OFDM) decoder **characterized in that** it comprises:
   a soft-output MIMO OFDM decoder layer (180) comprising a plurality of soft-output MIMO OFDM decoder units (181) for decoding a plurality of encoded data symbols multiplexed into a plurality of NSS spatial streams transported through a transmission channel over a plurality of NSD subcarriers, one unit (181) being provided per subcarrier, each unit (181) comprising:

   - a calculator configured to perform a QR decomposition of a channel matrix H characterizing the transmission channel through which the NSS spatial streams are transported and further configured to accordingly generate a tree structure,
   - a list generator configured to implement a recursive algorithm to define a list of candidate data symbols by performing a tree search on said tree structure, with each computation iteration of said recursive algorithm consisting in processing one node of the tree, and
   - a log-likelihood ratio (LLR) generator configured to compute a soft-output bit values corresponding to said list of candidate data symbols and to output corresponding decoded streams of data (182),

   **characterized in that** it further comprises:

   a channel quality estimator (310) configured to estimate, for each spatial stream, a quality of each subcarrier among said plurality of subcarriers; and
   an iterations allocator (320) configured to set a number of computation iterations to be allocated to each unit (181) of said soft-output MIMO OFDM decoder layer (180) on the basis of the quality of the corresponding subcarrier as estimated by the channel quality estimator (310) and under the constraint that a total number of computation iterations SIT allocated over the NSD subcarriers is predetermined.

2. The soft-output MIMO OFDM decoder according to the previous claim, wherein the iterations allocator (320) is configured to allocate more computation iterations to decode a subcarrier having a less good quality than to another subcarrier having a better quality.

3. The soft-output MIMO OFDM decoder according to any one of the previous claims, wherein the total number of computation iterations is predetermined in function of at least one among the available computational resources, a processing time allocated to decoding of said plurality of data symbols, the available memory space and a mix thereof.

4. The soft-output MIMO OFDM decoder according to any one of the previous claims, wherein the channel quality estimator (310) is configured to estimate the quality of each subcarrier in function of at least one among the channel matrix H and a noise variance of said transmission channel.

5. The soft-output MIMO OFDM decoder according to the previous claim, wherein the channel quality estimator (310) is configured to estimate, for each $k^{th}$ subcarrier, the quality of each $j^{th}$ spatial stream according to any one among the three following equations:

$$O_j(k) = \frac{1}{\left[\left(H(k)^H H(k)\right)^{-1}\right]_{jj}},$$

$$O_j(k) = \frac{1}{\left[\left(\sigma^2 I_{NSS} + H(k)^H H(k)\right)^{-1}\right]_{jj}} - 1 \,,$$

and

$$O_j(k) = \frac{\sum_{i \neq j} |h_i^H(k) h_j(k)|}{h_j^H(k) h_j(k)} \,,$$

where:

- $j = 1, ..., NSS,$
- $[X]_{jj}$ are the diagonal elements of matrix X,
- $\sigma^2$ is the noise variance of the transmission channel, and
- $I_{NSS}$ is a unity matrix of size NSS.

6. The soft-output MIMO OFDM decoder according to any one of the previous claims, wherein the iterations allocator (320) is configured to set the number of computation iterations to be allocated to each unit (181) according to the following equation:

$$SI(k) = \alpha\, C(k) + \beta,$$

where $C(k)$ is a function of the estimated quality of the $k^{th}$ subcarrier and where $\alpha$ and $\beta$ are determined by taking into account the total number of computation iterations SIT.

7. The soft-output MIMO OFDM decoder according to the previous claim, wherein the function $C(k)$ is proportional, or even equal, to a signal-to-interference ratio of the $k^{th}$ subcarrier.

8. The soft-output MIMO OFDM decoder according to any one of the two previous claims, wherein, when, for one $k^{th}$ subcarrier, the quality of one $j^{th}$ spatial stream is superior to a determined threshold value, the iterations allocator (320) is configured to reset the number of computation iterations to be allocated to the corresponding unit (181) equal to a minimum number of iterations SIm, with this latter being inferior to the average number of iterations allocated per subcarrier.

9. The soft-output MIMO OFDM decoder according to the previous claim, wherein, assuming that $\alpha$ and NSm, the number of subcarriers for which the number of computation iterations is forced to the minimum number of iterations SIm, are known, $\beta$ is given by the following processing performed by the iterations allocator (320):

$$\beta = \frac{1}{NSD - NSm}\left( SIT - NSm.SIm - \alpha \sum_{\substack{k=NSm \\ +1}}^{NSD} C(d(k)) \right)$$

where d is a sorted function of the C(k) quantities from the highest to the lowest.

10. The soft-output MIMO OFDM decoder according to any one of claims 6 and 7, wherein, assuming that $\alpha$ is known, $\beta$ and NSm, the number of subcarriers for which the number of computation iterations is forced to the minimum number of iterations SIm, are jointly evaluated with the following processing performed by the iterations allocator (320):

    a. Compute all the B(p) and D(p) values for all integer values *p*, with *p < NSD:*

$$B(p) = \frac{1}{NSD - p}\left( SIT - p.SIm - \alpha \sum_{k=p+1}^{NSD} C(d(k))\right)$$

$$D(p) = \text{card}\{1 \leq k \leq NSD \mid [\alpha\, C(k) + B(p)] < SIm\}$$

b. Select the $\beta$-solution corresponding to the largest $NSm$ according to:

$$NSm = \underset{p}{\text{argmax}}\, D(p)$$

$$\beta = B(NSm)$$

c. Compute, for each subcarrier, the number of computation iterations as:

$$SI(k) = \max([\alpha\, C(k) + \beta], SIm).$$

**11.** The soft-output MIMO OFDM decoder according to any one of the previous claims, further comprising at least one among:

- a layer (165) of fast Fourier transform (FFT) operators configured to convert the NRx received signals to the frequency domain before generating said tree structure and before estimating the quality of each subcarrier, and
- a multiplexing layer (125) configured to multiplex the decoded streams of data (182) outputted from the LLR generator and a FEC decoder (115) configured to output decoded information bits from the output of said multiplexing layer (125).

**12.** The soft-output MIMO OFDM decoder according to any one of the previous claims, wherein said recursive algorithm is designed for performing partial traversals of the tree structure according to a determined pruning strategy.

**13.** The soft-output MIMO OFDM decoder according to any one of the previous claims, further comprising a set of NRx antennas (175) for receiving the spatial streams.

**14.** A soft-output multiple-input multiple-output (MIMO) orthogonal frequency-division multiplexing (OFDM) decoding method **characterized in that** it comprises:
with a soft-output MIMO OFDM decoder layer (180) comprising a plurality of soft-output MIMO OFDM decoder units (181) for decoding a plurality of encoded data symbols multiplexed into a plurality of NSS spatial streams transported through a transmission channel over a plurality of NSD subcarriers, one unit (181) being provided per subcarrier, each unit (181) implementing the following steps of the method:

- performing, by using a calculator configured to, a QR decomposition of a channel matrix H characterizing the transmission channel through which the NSS spatial streams are transported and further accordingly generating a tree structure,
- implementing, by using a list generator configured to, a recursive algorithm to define a list of candidate data symbols by performing a tree search on said tree structure, with each computation iteration of said recursive algorithm consisting in processing one node of the tree, and
- computing, by using a log-likelihood ratio (LLR) generator configured to, a soft-output bit values corresponding to said list of candidate data symbols and outputting corresponding decoded streams of data (182),

**characterized in that** the method further comprises:

estimating, by using a channel quality estimator (310) configured to, for each spatial stream, a quality of each subcarrier among said plurality of subcarriers; and

setting, by using an iterations allocator (320) configured to, a number of computation iterations to be allocated to each unit (181) of said soft-output MIMO OFDM decoder layer (180) on the basis of the quality of the corresponding subcarrier as estimated by the channel quality estimator (310) and under the constraint that a total number of computation iterations SIT allocated over the NSD subcarriers is predetermined.

15. Computer-program product that contains software program instructions, where execution of the software program instructions by at least one data processor results in performance of operations that comprise execution of the steps of the method as in the previous claim.

## Prior Art

## Figure 1a

## Figure 1b

# Prior Art

Figure 2

Figure 3

Figure 4

Figure 5

Figure 6

Figure 7

Europäisches
Patentamt

European
Patent Office

Office européen
des brevets

# EUROPEAN SEARCH REPORT

Application Number

EP 18 30 5475

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | STUDER C ET AL: "Soft-Output Sphere Decoding: Performance and Implementation Aspects", SIGNALS, SYSTEMS AND COMPUTERS, 2006. ACSSC '06. FORTIETH ASILOMA R CONFERENCE ON, IEEE, PI, 1 October 2006 (2006-10-01), pages 2071-2076, XP031081392, DOI: 10.1109/ACSSC.2006.355132 ISBN: 978-1-4244-0784-2 * the whole document * ----- | 1-15 | INV. H04L25/03 |
| Y | US 2013/301758 A1 (REIAL ANDRES [SE] ET AL) 14 November 2013 (2013-11-14) * claims 5,29, 34, 36, 37 * ----- | 1-15 | |

**TECHNICAL FIELDS SEARCHED (IPC)**

H04L

The present search report has been drawn up for all claims

| Place of search | Date of completion of the search | Examiner |
|---|---|---|
| Munich | 15 October 2018 | Belloni, Paolo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

     .......................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 18 30 5475

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2018

| Patent document cited in search report | Publication date | Patent family member(s) | | Publication date |
|---|---|---|---|---|
| US 2013301758 A1 | 14-11-2013 | EP | 2850766 A2 | 25-03-2015 |
| | | US | 2013301758 A1 | 14-11-2013 |
| | | WO | 2013172763 A2 | 21-11-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8194798 B
- US 20090141835 A1

### Non-patent literature cited in the description

- **ALBERT VAN ZELST.** MIMO OFDM for wireless LANs. University of Eindhoven, 14 April 2004
- **ALBERT VAN ZELST.** MIMO OFDM for wireless LANs
- **ABDELLATIF SALAH.** New Soft Stack Decoder for MIMO Channel. *proceedings of "Asilomar Conference on Signals, Systems, and Computers,* 2008
- **C. STUDER et al.** Soft-output Sphere Decoding: Performance and Implementation Aspects. *Fortieth Asilomar Conference on Signals, Systems and Computers,* 2006